Europäisches Patentamt

(19) European Patent Office (11) Numéro de publication: **0 020 195**

Office européen des brevets **B1**

(12) **FASCICULE DE BREVET EUROPEEN**

(45) Date de publication du fascicule du brevet: **06.07.83**  (51) Int. Cl.³: **G 08 C 19/06,**
**G 08 C 19/22,**
(21) Numéro de dépôt: **80400530.4** **G 05 B 19/42, G 06 F 3/00,**
**G 06 F 13/04**
(22) Date de dépôt: **18.04.80**

(54) Appareil multiplex formant interface atemporelle pour l'enregistrement d'ordres et commandes.

(30) Priorité: **18.04.79 FR 7909788**

(43) Date de publication de la demande:
**10.12.80 Bulletin 80/25**

(45) Mention de la délivrance du brevet:
**06.07.83 Bulletin 83/27**

(84) Etats contractants désignés:
**DE GB IT**

(56) Documents cités:
**DE - A - 2 730 290**
**FR - A - 2 263 567**
**US - A - 3 193 803**
**US - A - 3 731 220**
**US - A - 3 831 195**
**US - A - 4 110 557**

**ELEKTROTECHNIK, vol. 55, no. 6, 22 mars 1973,**
**Berlin, DE,**
**S. LOSSIE et al.: "Messwerte per Draht und Funk", pages 18—22**

(73) Titulaire: **Gendrot, André Jean-Claude**
**78 boulevard Ornano**
**F-75018 Paris (FR)**

(72) Inventeur: **Gendrot, André Jean-Claude**
**78 boulevard Ornano**
**F-75018 Paris (FR)**

(74) Mandataire: **Bloch, Robert et al,**
**39 avenue de Friedland**
**F-75008 Paris (FR)**

(56) Documents cités:
**TECHNISCHES MESSEN A.T.M., vol. 43, no. 488, septembre 1976,**
**Munich, DE,**
**H. P. GLOCKMANN: "Aufzeichnung und übergtragung von analogen Messdaten in PCM-Technik", pages 271—278**

(56) Documents cités:
MESURES — REGULATION — AUTOMATISME,
vol. 42, no. 1/2, janvier-février 1977,
Paris, FR;
J. L. PREUD'HOMME et al.: "Données
analogiques — Acquisition et Mémorisation",
pages 67—72

MESSEN UND PRÜFEN, no. 1/2, janvier-février
1978,
Bad Wörishofen, DE.
L. DREBINGER et al.: "Ein fernprogrammierbares 32-Kanal-Telemetriesystem aus
Serienkomponenten", pages 29—35, 51

## Appareil multiplex formant interface atemporelle pour l'enregistrement d'ordres et commandes.

L'invention se rapporte d'une manière générale aux techniques de multiplexage et d'enregistrement d'informations, et notamment à leur mise en oeuvre pour la préparation puis l'exécution différée et/ou répétée de programmes complexes de commandes avec possibilité de les modifier à volonté.

Plus particulièrement, l'invention concerne un appareil multiplex formant interface pour permettre l'enregistrement sur une seule piste d'une bande ou autre support magnétique, la restitution à l'identique et la modification sélective d'un ensemble de tensions de commande représentatives d'ordres ou grandeurs de nature anlogique ou bien numérique ou codée. Le multiplexage temporel de ces tensions est assuré par leur échantillonnage périodique séquentiel, de sorte que l'enregistrement est formé de "mots" successifs comprenant chacun une suite ordonnée de "moments" respectivement affectés aux différentes tensions de commande, dont le niveau échantillonné est représenté par le retard relatif du front intermédiaire d'un double créneau, engendré par un comparateur de tensions couplé à un générateur de rampes récurrentes. Ces techniques sont en elles mêmes connues p.ex. par les documents "elektrotechnik" 55 (1973) p. 18—22, "Mesures, Régulation — Automatisme" (JAN/FEV 1977), p. 67—72 et FR—A—2263567.

L'invention met en oeuvre ces techniques dans des conditions originales qui confèrent à l'appareil des fonctions d'interface "transparente" et "atemporelle", au sens où cet appareil permet d'effectuer un enregistrement ou de le corriger sélectivement en contrôlant en temps réel les résultats qui seront obtenus en temps différé lors de sa lecture, et ce en s'affranchissant de tous les défauts de fidélité de restitution que pourraient introduire les circuits ce l'appareil lui-même ou les variations de vitesse du dispositif d'enregistrement magnétique auquel il est couplé.

A cet effet, l'invention qui part d'un appareil comportant trois circuits d'interface dont l'un est couplé à un dispositif d'enregistrement magnétique sélectivement utilisable en écriture ou en lecture et dont les autres sont respectivement un multiplexeur d'entrée et un démultiplexeur de sortie couplés à deux ensembles homologues de sources et récepteurs de tensions de commande et incluent deux registres identiques dont l'exploration séquentielle cyclique est commandée pas à pas à partir d'impulsions de synchronisation est caractérisée en ce que cet appareil comprend en combinaison opérante:

— des circuits communs utilisés tant en écriture qu'en lecture, qui incluent

· un oscillateur engendrant des impulsions d'horloge dont la fréquence de récurrence est asservie à la vitesse de défilement du support d'enregistrement en lecture,

· un compteur-diviseur associé engendrant une impulsion de synchronisation chaque fois qu'il a reçu un nombre déterminé d'impulsions d'horloge,

· un générateur intégrant ces dernières et remis à zéro lors de chaque impulsion de synchronisation pour produire une tension en rampes récurrentes dont chacune est par ailleurs limitée à un niveau égal à celui d'une tension de commande choisie,

· une mémoire analogique élémentaire qui d'une part est périodiquement couplée à la sortie dudit générateur pour échantillonner le niveau de limitation de chaque rampe, et d'autre part est reliée en permanence à l'entrée du registre démultiplexeur, dont chaque sortie est couplée à une semblable mémoire,

— et des circuits utilisés sélectivement en écriture et en lecture, à savoir

· un comparateur de tensions couplé aux sorties du registre multiplexeur et du générateur précités pour engendrer, dès que le niveau de chaque rampe devient égal à la tension de commande à transcrire, un signal de basculement qui commande d'une part la limitation de ladite rampe et d'autre part l'inversion de la polarité d'un signal d'écriture par ailleurs inversée lors de chaque impulsion de synchronisation, de sorte que ce signal est formé de doubles créneaux à front intermédiaire mobile en fonction du niveau de la tension de commande transcrite,

· et un amplificateur de lecture séparant les impulsions négatives et positives dérivées du signal enregistré, qui sont utilisées les unes pour l'asservissement en fréquence de l'oscillateur précité et les autres pour commander la limitation de chaque rampe engendrée par le générateur précité.

Les avantages essentiels procurés par l'invention tiennent d'une part à la facilité de la mise au point de programmes complexes dont les commandes élémentaires peuvent être établies ou modifiées séparément ou en toute combinaison, dans un ordre indifférent et avec vérification immédiate des résultats obtenus, et d'autre part au fait que d'éventuelles variations de la vitesse de défilement du support d'enregistrement — par exemple entraîné manuellement au ralenti — sont sans effet sur la séquence relative et sur les niveaux absolus des commandes restituées.

D'autres caractéristiques préférées et les avantages de l'invention apparaîtront plus clairement à la lecture de la description qui suit d'un exemple de mise en oeuvre non limitatif illustré par les dessins annexés, sur lesquels:

La Figure 1 donne le schéma synoptique d'une installation complexe, en l'occurrence une machine-outil à commande programmée, incluant un appareil selon l'invention;

La Figure 2 est un diagramme temporel regroupant divers signaux intervenant dans le fonctionnement de cet appareil; et

La Figure 3 donne le schéma détaillé de l'organisation de l'appareil, dont seuls les principaux éléments sont représentés sous forme symbolique.

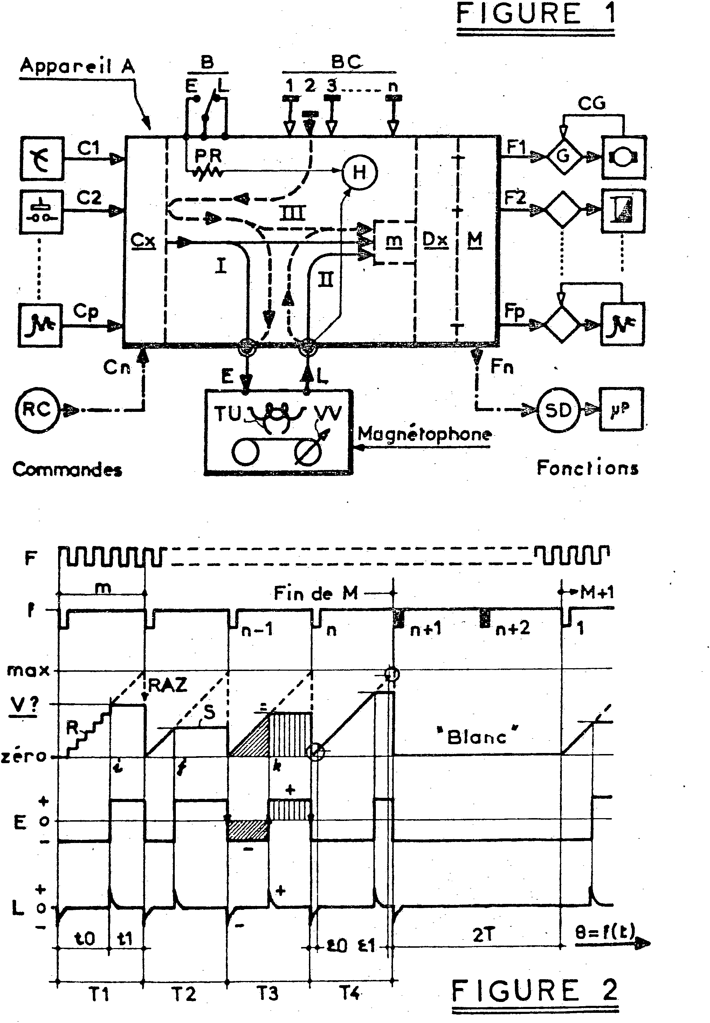

L'appareil A montré sur la Figure 1 est supposé servir à la conduite d'une machine-outil devant effectuer des travaux répétitifs mais modifiables à volonté, et incluant à cet effet une pluralité de moteurs et relais électriques, des moyens de préhension pour l'immobilisation et le transport des pièces comme pour l'échange des outils s'il y a lieu, et éventuellement un système numérique de gestion et/ou de mesure.

Un simple rectangle figure cet appareil A, puisqu'il comporte quatre interfaces distinctes respectivement symbolisées par les côtés du rectangle, à savoir:

— en haut, un ensemble d'organes de commande manuelle, comprenant un basculeur B pour la sélection "Ecriture" E ou "Lecture" L et des boutons-poussoirs de correction BC. L'état de ces organes conditionne le mode de fonctionnement de l'aparetil;

— en bas, un magnétophone comportant une entrée d'écriture E et une sortie de lecture L couplées à une même et unique tête TU sous laquelle défile l'une des pistes d'une bande magnétique susceptible d'être entraînée à une vitesse variable VV par le cabestan du magnétophone, voire même à la main;

— à gauche, un nombre a priori quelconque d'entrées de commande C1 ... Cn respectivement couplées à autant d'organes de règlage ou capteurs fournissant une valeur de consigne sous la forme d'une tension électrique variable, ou bien analogique, ou bien numérique ou codée; et

— à droite, autant de sorties F1 ... Fn dont chacune reflète la valeur de consigne fixée par l'entrée correspondante et commande en conséquence la fonction voulue par l'intermédiaire d'un amplificateur-adaptateur G dont le gain peut être fixe (boucle ouverte) ou asservi à la fonction réalisée par un circuit de contre-réaction ou contrôle de gain CG, selon la nature de ladite fonction.

Ainsi et par exemple, le rhéostat couplé à l'entrée C1 permet de faire varier la vitesse de rotation du moteur couplé à la sortie F1 avec un asservissement éliminant toute influence de sa charge. Par contre, l'interrupteur couplé à l'entrée C2 peut commuter le relais couplé à la sortie F2 sans qu'il soit besoin d'asservissement, l'amplificateur-adaptateur interposé étant bistable par nature si besoin. D'une autre manière, l'ordre de fermeture de la pince du bras mécanique de préhension fourni à l'entrée Cp et reproduit à la sortie Fp n'implique pas un serrage excessif de la pièce saisie si l'asservissement est conçu pour assurer une exécution "intelligente" des ordres.

On remarquera que toutes les commandes et fonctions susmentionnées sont de nature analogique et traduites par des tensions dont l'amplitude varie progressivement ou bien par tout ou rien. Par contre, l'entrée Cn et la sortie Fn étant supposées traiter des grandeurs numériques ou codées sont représentées différemment des autres, car elles mettent en jeu des circuits spécifiques, qui seront décrits plus loin.

A l'intérieur du rectangle figurant l'appareil A, plusieurs compartiments délimités par des traits tiretés correspondent à des sous-ensembles fonctionnels, à savoir et d'une part, un codeur ou multiplexeur séquentiel d'entrée Cx par lequel sont tour à tour prélevés les signaux présents sur les entrées Ca ... Cn, et d'autre part, un décodeur ou démultiplexeur séquentiel de sortie Dx qui fonctionne en synchronisme avec le codeur pour prélever dans une mémoire dite "de moment" m une information élémentaire et la présenter à l'entrée voulue d'une mémoire dite "de mot" M comportant n adresses respectivement associées aux fonctions F1 ... Fn. Le cycle de la mémoire de moment m correspond à un pas de progression du codeur Cx ou décodeur Dx, tandis que le cycle de la mémoire de mot M est synchronisé sur ces derniers, afin de maintenir l'état de chacune des fonctions F1 ... Fn pendant toute la durée d'un mot de n moments.

La synchronisation des différentes opérations susmentionnées comme d'autres ultérieurement décrites est assurée par une "horloge" H, qui en fait est un cadenceur dont la période de récurrence varie — selon un aspect essentiel de l'invention — non seulement en mode "Ecriture" E si le règlage d'un potentiomètre PR est modifié, mais surtout en mode "Lecture" L et alors dans l'exacte proportion des variations de vitesse VV de la bande magnétique défilant sous la tête TU, et ce quelque soit la cause de ces variations. Pour illustrer ces faits, l'horloge H est symboliquement montrée pourvue de deux entrées de commande, dont l'une est directement reliée à la sortie L du magnétophone, tandis que l'autre est reliée à travers le potentiomètre de règlage PR à la sortie E du basculeur B de commutation "Ecriture/Lecture".

La Figure 1 montre enfin sous forme symbolique l'organisation interne des circuits de l'appareil A dans ses trois modes de fonctionnement possibles. Le premier mode, dit de préparation ou d'écriture, permet de transférer directement tous les ordres présentés sur les entrées C1 ... Cn vers les sorties F1 ... Fn correspondantes, tout en les enregistrant simultanément sur la bande magnétique supposée initialement vierge ou préalablement effacée. Pour ce mode d'écriture, le basculeur B doit être placé en position E et aucun des boutons BC peut n'être enfoncé. Le circuit I montre que dès lors, tout signal issu du codeur-multiplexeur Cx est transmis parallèlement à la mémoire de moment m et à l'entrée E du magnétophone.

Pour obtenir le second mode dit de lecture simple, il suffit de commuter le basculeur B en position L, les boutons BC restant tous relevés. Dès lors, la mémoire de moment m est déconnectée du codeur-multiplexeur d'entrée Cx et se trouve couplée à la seule sortie L du magnétophone, comme le montre le circuit II. C'est dire que seules les informations préalablement enregistrées sur la bande magnétique — lors d'une phase antérieure d'écriture — se présenteront sur les sorties F1 ... Fn selon des combinaisons et dans un ordre de succession immuables lors du défilement de la bande, sans que leur nature et/ou leur valeur soient affectées par d'éventuelles variations de la vitesse de défilement, par exemple si la bande est entraînée à la main pour examiner en détail et au ralenti un passage de l'enregistrement.

Pourpasser au troisième mode dit de lecture avec correction sélective ou plus simplement de correction, il suffit d'enfoncer celui ou ceux des boutons BC dont le range correspond à celui de toute fonction F1 ... Fn devant être modifiée par rapport à sa valeur préalablement enrigistrée, et d'agir en conséquence sur l'organe de commande relié à l'entrée C1 ... Cn de même rang. Dès lors, si par exemple et comme représenté le bouton de correction BC-2 est seul enfoncé, et comme le suggère le circuit III en trait tireté, les nouveaux ordres présentés à l'entrée C2 sont transmis en mode écriture à l'entrée E du magnétophone pour être substitués à ceux préalablement enregistrés et sont simultanément chargés dans la mémoire de moment m, qui reçoit par ailleurs en simple lecture tous les ordres enregistrés concernant les fonctions autres que F2, qui restent non modifiées.

Ainsi, dans tous les modes de fonctionnement de l'appareil, les fonctions F1 ... Fn se manifestent toujours dans leur dernier état enregistré sur la bande magnétique, et notamment à l'instant même de leur enregistrement ou modification pour les modes d'écriture (I) et de correction (III), qui permettent donc de constater le résultat de toute action en temps réel, éventuellement ralenti ou accéléré à la demande. Comme l'appareil permet en outre le retour en arrière, avec verrouillage ou bien inversion de certains circuits pour respectivement garantir leur sécurité comme celle de l'enregistrement ou bien au contraire modifier ce dernier par des manipulations d'ordres à rebours, il est bien évident que la préparation et la mise au point de tout programme comme sa modification ultérieure peuvent s'effectuer avec la plus grande facilité en agissant sur les commandes C1 ... Cn soit séparément et successivement, soit en toute combinaison.

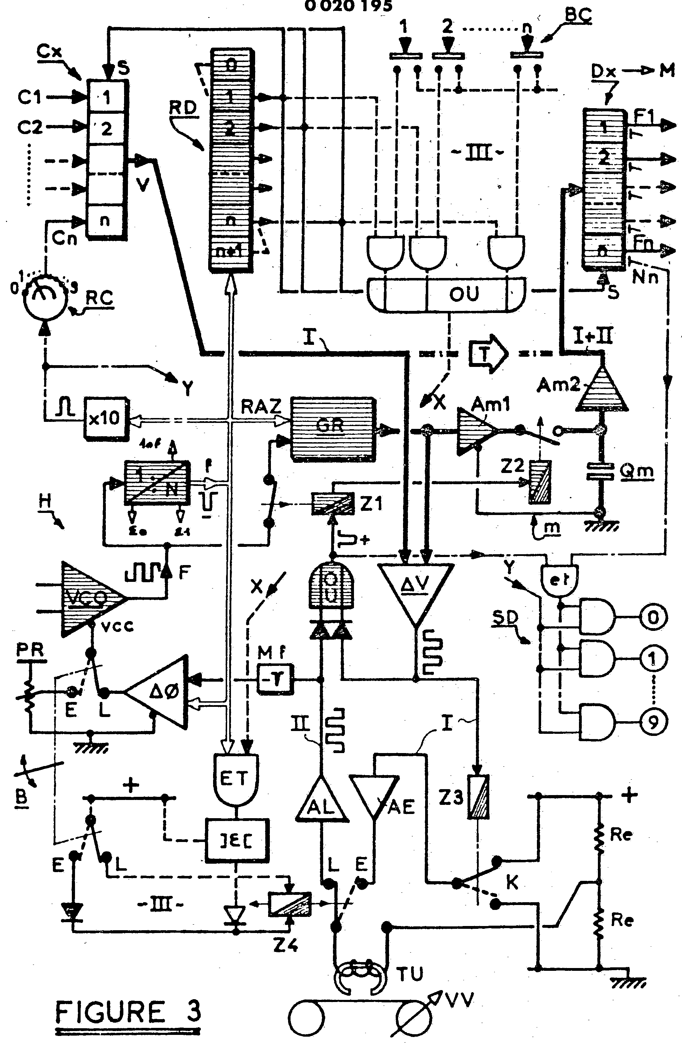

La Figure 2 est un diagramme temporel des principaux signaux intervenant dans le fonctionnement de l'appareil A: Le signal F est celui fourni par l'horloge ou cadenceur H de la Figure 1, à savoir l'oscillateur VCO qui sera décrit en relation avec la Figure 3. Ce signal F est formé de créneaux alternés ou d'impulsions récurrentes à fréquence élevée, fonction du nombre des commandes Cl ... Cn à prendre en compte, de la vitesse maximale de variation des tensions les représentant, et enfin de la précision souhaitée; en pratique, une fréquence de récurrence de l'ordre de quelques 100 kHz suffit pour assurer l'exécution fidèle de plusieurs dizaines d'ordres par des moyens électromécaniques, hydrauliques, pneumatiques ou autres organes effecteurs du genre communément utilisé dans l'industrie ou le spectacle.

Comme pour tout signal d'horloge, les flancs des créneaux ou les fronts des impulsions doivent être aussi raides que possible. En outre, dans le cas présent, il est intéressant que le rapport cyclique soit important.

Le signal f dérive du précédent par comptage et maintien de chaque Nème impulsion seulement. Sur la Figure 2, ce nombre quelconque est fixé à m = 6 pour la commodité de la représentation, mais en pratique il est très supérieur et au moins égal à l'inverse de la précision de mesure souhaitée, soit en fait de l'ordre de quelques centaines. Dans le cas présent, l'intervalle entre deux impulsions f consécutives correspond au "moment" déjà évoqué à propos de la mémoiretampon élémentaire de la Figure 1. Si une suite de n moments constitue un "mot" au sens précité, la séparation des mots successifs implique que dans le signal f, chaque impulsion de rang n + 1 marquant la fin d'un mot joue un rôle particulier, de même que la suivante de rang n + 2 si besoin est, afin d'affecter le rang 1 à la prochaine impulsion et ainsi initialiser le mot suivant. Pour ces raisons, les impulsions de rangs n + 1 et n + 2 sont soulignées en noir.

La courbe suivante montre qu'une tension inconnue V? peut êtremesurée par comparaison avec une rampe R croissant de manière quasi-linéaire depuis une valeur "zéro" jusqu'à une valeur "max" pendant un certain intervalle de temps T à l'issue duquel la rampe retourne à zéro. En effet, l'instant i de coïncidence des deux tensions divise l'intervalle T en deux parties t0, t1 de durées telles que t0/T = V?/Vmax. Commeil est bien connu par exemple dans les voltmètres électroniques, si la rampe R se répète assez rapidement, la mesure peut facilement suivre les variations de V?.

Dans le cas présent et comme représenté pour la première période T1, la rampe R n'est pas strictement linéaire mais présente des degrés, car elle est engendrée — selon un autre aspect essentiel de l'invention — par simple intégration pendant la durée de chaque moment m des impulsions successives du signal F, dont le rapport cyclique est pour cette raison aussi élevé que possible. Comme leur nombre est par ailleurs important, les degrés ainsi obtenus sont presque rectangulaires et de faible hauteur relative (par exemple, 0,5% pour F = 200 f). En conséquence, la rampe R est représentée par une droite dans les périodes suivantes T2 . . . T4, dont chacune illustre un aspect particulier du fonctionnement de l'appareil A;

La seconde période T2 montre qu'à partir de l'instant j pour lequel la valeur de la tension de rampe devient égale à celle de la tension mesurée, sa croissance est interrompue; la rampe R se poursuit dès lors et jusqu'à sa remise à zéro par un plateau ou sommet tronqué S de niveau constant égal à la tension mesurée.

La troisième période T3 montre comment est dérivé de chaque rampe R ainsi conformée le signal d'écriture E fourni à la tête d'enregistrement du magnétophone: ce signal est formé de créneaux correspondant à chaque moment ou période, qui débutent par un front descendant coïncidant avec celui d'une impulsion du signal f, dont les alternances négative et positive sont séparées par un front ascendant "mobile" provoqué à l'instant k de coïncidence entre la rampe et la tension mesurée, et donc correspondant respectivement à la rampe proprement dite R et à son sommet tronqué S.

La quatrième période T4 montre enfin qu'en raison des inévitables problèmes de commutation lors de sa remise à zéro, la rampe présente des irrégularités au voisinage de son pied et de son sommet, et qu'il convient donc pour cette raison — sans préjudice d'autres motifs — de s'abstenir de toute mesure pendant de très courts intervalles de temps $\varepsilon 1$ et $\varepsilon 0$ suivant le début et précédant la fin de chaque moment.

Enfin, les deux périodes suivantes groupées correspondent au "blanc" inséré entre la fin du mot M et l'initialisation du mot suivant M + 1.

La dernière courbe de la Figure 2 montre que le signal de lecture L est — en vertu du principe de fonctionnement d'un magnétophone — la simple dérivée du signal enregistré E, et présente en conséquence des impulsions négatives dont le front coïncide avec celui des impulsions du signal f, alternant avec des impulsions positives dont le front coïncide avec le début du sommet S des rampes R. Ceci étant, le signal de lecture L permet de restituer la tension mesurée lors de chaque période ou moment, puisqu'elle est égale à la valeur lors de chaque impulsion positive de la rampe R reconstituée en synchronisme avec les impulsions négatives.

Ce procédé de traduction des variations d'amplitude d'une tension par la modulation du rapport cyclique de créneaux à front intermédiaire mobile est bien connu dans la technique, de même que la représentation de tels créneaux par le signal dérivé permettant leur reconstitution. Néanmoins, l'invention met en oeuvre ces procédés connus d'une manière originale répondant aux besoins de l'application spécifique envisagée, à savoir au fait que le temps de référence $\theta$ du diagramme de la Figure 2 peut être une fonction quelconque du temps réel, selon la vitesse et le sens du défilement de la bande magnétique.

En effet, lorsque l'appareil A est utilisé en mode lecture simple (II), la vitesse de défilement de la bande est sujette à de légères fluctuations, en relation notamment avec la tension d'alimentation du magnétophone. Mais surtout, lorsque l'appareil est utilisé en mode écriture (I) ou en mode correction (III), le sens et la vitesse de défilement de la bande font l'objet de fréquentes modifications, par exemple pour examen détaillé et reprise d'un passage de l'enregistrement ou pour introduction séquentielle de corrections séparées. Il s'ensuit comme déjà indiqué que le temps de référence $\theta$ propre à la bande ainsi enregistrée est une fonction aléatoire $\theta = f(t)$ du temps réel t, qui en première approximation sert de référence lors de la lecture simple d'un enregistrement effectué en temps réel.

C'est pourquoi l'appareil conforme à l'invention est agencé — comme on le verra ci-après — pour comporter une référence de temps intrinsèque, dont la mise en oeuvre implique notamment et comme monté sur la Figure 2 l'emploi des deux signaux de référence temporelle invariable F et f pour la génération des rampes de comparaison R en escalier et à sommet tronqué.

Cette référence de temps intrinsèque est en fait constituée par la vitesse instantanée de défilement de la bande magnétique, à laquelle est asservie la fréquence du signal d'horloge H, comme va le montrer la description du schéma de l'appareil donné à la Figure 3.

Cette Figure 3 représente de manière symbolique mais fonctionnelle les éléments et circuits propres à l'appareil A inclus dans le rectangle de la Figure 1, leur couplage au magnétophone, et enfin un exemple d'utilisation de l'appareil pour le traitement de grandeurs numériques.

Sur le schéma, les circuits en trait fort acheminent des signaux de type analogique pouvant éventuellement varier par tout ou rien. Les autres circuits traitent des signaux de type logique, c'est à dire présentant l'un ou l'autre de deux états bien déterminés. Parmi ces circuits, ceux représentés en trait interrompu sont spécifiques de l'exploitation de l'appareil en mode correction (III), ceux en trait mixte du traitement de grandeurs numériques, et enfin ceux en double trait acheminent le signal d'horloge asservi f: A cet égard, un oscillateur VCO engendrant le signal à haute fréquence F de la Figure 2 est couplé à un compteur-diviseur 1/N fournissant le signal f. La fréquence de fonctionnement de l'oscillateur VCO dépend du niveau d'une tension continue de commande VCC fournie en mode écriture (I) par le potentiomètre de réglage PR, et en mode lecture (II) ou correction (III) par un comparateur de phase $\Delta\phi$. A cet effet, la borne de commande de l'oscillateur VCO est sélectivement couplée au potentiomètre ou au comparateur par un inverseur E/L actionné par le basculeur B à commande manuelle, qui hormis les boutons de correction BC/1 ... n, est le seul organe de l'appareil A normalement accessible à la manoeuvre.

Le signal F engendré par l'oscillateur VCO est par ailleurs appliqué à travers le contact normalement fermé d'un relais Z1 à l'entrée d'un générateur de rampes GR en fait constitué par un montage dit "pompe à diodes" dont la remise à zéro est assurée par le signal f issu du compteur-diviseur 1/N. La sortie de ce générateur GR est couplée d'une part à une entrée d'un amplificateur opérationnel Am1 formant partie de la mémoire de moment m, et d'autre part à une entrée d'un comparateur de tension ΔV dont la seconde entrée est directement reliée par le circuit I à la sortie du codeur-multiplexeur d'entrée Cx.

La mémoire de moment m comprend, en sus de l'amplificateur d'entrée Am1 déjà mentionné, un condensateur Qm relié à sa sortie à travers le contact normalement ouvert d'un relais Z2 excité par le relais Z1 ou bien dès l'ouverture de son contact. La tension aux bornes du condensateur Qm est appliquée à l'entrée d'un second amplificateur opérationnel Am2, dont la sortie est directement reliée par un circuit commun I + II à l'entrée du décodeur-démultiplexeur Dx.

Incidemment, on remarquera que le fonctionnement de l'appareil fait que tout se passe — pour des raisons qui apparaîtront ci-après — comme si le circuit I issu du multiplexeur Cx était directement relié au circuit I + II qui aboutit au démultiplexeur Dx. La flèche T symbolise cette liaison directe, en temps réel ou différée par le truchement de l'enregistrement sur bande magnétique, liaison certes fictive maisqui confère à l'appareil une "transparence" bien réelle lors de son exploitation.

Le multiplexeur Cx et le démultiplexeur Dx sont constitués par des registres identiques comportant n positions de contact analogique, c'est à dire capables de recevoir et acheminer une tension de valeur déterminée, en l'occurrence représentative soit d'un ordre C1 ... Cn, soit d'une commande de fonction F1 ... Fn. Les positions des deux registres sont explorées en synchronisme — en fait, avec un décalage d'un moment symbolisé par leur décalage vertical sur le dessin — par l'action d'impulsions de synchronisation S fournies par les étages 1 à n d'un registre à décalage RD bouclé en anneau et dont la progression est commandée par le signal d'horloge f. On remarquera que le registre à décalage RD comporte deux étages supplémentaires permettant de créer le "blanc" de séparation des mots successifs, par introduction d'un intervalle de deux moments entre deux explorations consécutives des n positions des registres Cx et Dx, comme il a déjà été indiqué en relation avec la Figure 2.

Il convient de bien remarquer ici que cet agencement des registres Cx, Dx et RD garantit en toutes circonstances la correspondance univoque entre les commandes C1 ... Cn et les fonctions respectives F1 ... Fn, mais que cette correspondance vraie à tout instant et symbolisée par la flèche T est en fait de nature atemporelle, au sens où elle dépend de la séquence des impulsions d'horloge f, mais est indifférente à leur fréquence de récurrence, et donc à la vitesse de défilement de la bande magnétique mesurée en temps réel.

Tous les composants de l'appareil A jusqu'à présent mentionnés — à l'exception des deux comparateurs ΔV et Δφ, et bien entendu du multiplexeur Cx — interviennent quand il est utilisé tant en mode écriture (I) qu'en mode lecture (II) ou correction (III). Ces composants sont en conséquence hachurés horizontalement sur le dessin, pour souligner qu'ils constituent avec leurs liaisons et accessoires les circuits dits "communs" de l'appareil. La mise en oeuvre de ces circuits communs dans tous les cas d'emploi non seulement réduit le coût de construction et l'encombrement de l'appareil mais surtout gatantit la précision et la fidélité de son fonctionnement et notamment sa "transparence", par compensation automatique à la lecture d'un enregistrement de tout défaut introduit lors de son écriture, par exemple en raison de la non-linéarité des rampes fournies par le générateur GR ou de la courbe de transfert des amplificateurs Aml, Am2, seuls concernés par les signaux analogiques chargés en tous cas dans le même registre de sortie Dx.

Ceci étant, la qualité des performances de l'appareil A ne dépend guère que de celle des comparateurs ΔV et Δφ et des amplificateurs d'ecriture AE et de lecture AL, qui tous peuvent être constitués par des amplificateurs opérationnels à hautes performances en précision et fiabilité, et qui pris deux à deux sont les composants essentiels des circuits spécifiques d'écriture et de lecture, respectivement représentés à droite et à gauche dans la partie inférieure de la Figure 3.

Le circuit spécifiquement mis en oeuvre en mode écriture I part du comparateur de tensions ΔV, qui engendre lorsque la rampe issue du générateur GR atteint le niveau de la tension V provenant du multiplexeur Cx par le circuit I, un signal dit "de basculement", en fait constitué par un front d'inversion de l'amplitude du signal de sortie du comparateur, supposé fixé à l'un ou l'autre de deux niveaux discrets, selon le sens de la différence de tension appliquée entre ses entrées. Ce signal de sortie doit être amplifié et converti de manière à donner naissance à des courants assez intenses et de sens alternativement opposés dans la tête d'enregistrement TU du magnétophone. A cet effet, le circuit d'écriture comprend encore un relais Z3 qui en réponse au signal de sortie du comparateur ΔV bascule le contact mobile d'un inverseur K alternativement de l'une à l'autre de deux bornes respectivement reliées aux pôles (+) et (—) d'une source de tension continue. Cette source alimente par ailleurs un pont diviseur formé de deux résistances égales Re. La borne commune de l'inverseur K est couplée à l'entrée de l'amplificateur d'écriture AE, tandis que la jonction commune des résistances Re est reliée à l'une des extrémités de l'enroulement de polarisation de la tête d'enregistrement TU, dont l'autre extrémité est alors reliée à la sortie de l'amplificateur par le contact inverseur d'un relais Z4 à double bobine excité vers la droite par un inverseur du basculeur B en position d'écriture E.

Le circuit spécifiquement mis en oeuvre en mode lecture II part de la borne L de l'inverseur du relais Z4 reliée à l'entrée de l'amplificateur de lecture AL, qui à partir des impulsions alternativement négatives et positives induites dans la tête de lecture TU reconstitue un signal en créneaux semblable à celui fourni par le comparateur $\Delta$V en mode écriture. Ce signal est appliqué à l'entrée d'un circuit Mf qui en détecte chaque front négatif et le met en forme d'impulsion de calibre identique à celui des impulsions de synchronisation f. Les impulsions des deux origines sont appliquées aux entrées du comparateur de phase $\Delta\phi$, qui fournit en sortie une tension continue VCC d'asservissement de la fréquence F de l'oscillateur VCO propre à annuler tout décalage terporel desdites impulsions. Il en résulte que la fréquence d'horloge F est à tout moment proportionnelle à la vitesse de défilement VV de la bande magnétique, et par suite, que le début et la fin de chaque rampe engendrée par le générateur GR coïncident avec les fronts de deux impulsions négatives issues de la lecture de cette bande.

Or, en écriture comme en lecture, la croissance de chaque rampe est arrêtée au début des créneaux positifs respectivement issus du comparateur de tensions $\Delta$V ou de l'amplificateur de lecture AL, transmis par des diodes aux entrées d'une porte "OU" assurant l'excitation du relais Z1 et donc l'ouverture de son contact, qui interrompt la fourniture des impulsions d'horloge F au générateur de rampes GR. Ainsi, chaque rampe est limitée en lecture exactement au même niveau qu'en écriture, à savoir au niveau de la tension V à laquelle est affecté le moment m en cause, lequel correspond au même couple ordre C1 ... Cn / fonction F1 ... Fn grâce à l'action du registre à décalage RD commandant la progression synchrone du multiplexeur Cx et du démultiplexeur Dx.

Au total, durant la partie finale de chaque moment, la sortie du générateur GR est portée en lecture au niveau auquel elle avait été limitée en écriture, et ce niveau est celui de la tension V représentative d'un ordre destiné à la fonction homologue. En d'autres termes, la mémoire de moment m retrouve en temps différé à la lecture le même état qu'en temps réel à l'écriture, de sorte que la transparence de l'appareil reste préservée, quel que soit le laps de temps séparant les deux opérations.

L'identité de ces deux états est en outre garantie par l'agencement particulier de la mémoire de moment m, et notamment par la présence des amplificateurs Am1 et Am2 agissant comme adaptateurs d'impédance et suiveurs de tension pour assurer la charge du condensateur Qm au niveau exact de la sortie du générateur GR échantillonnée en temps opportun par excitation temporaire du relais Z2, puis le maintien de ce niveau de charge jusqu'à l'échantillonnage suivant, lequel provoque l'augmentation ou la diminution de la charge dudit condensateur en fonction de la valeur relative de la nouvelle tension considérée en écriture ou lecture.

On remarquera que la faible impédance de sortie de l'amplificateur Am1 permet une charge très rapide du condensateur Qm, qui peut être maintenue sans perte sensible grâce à l'impédance d'entrée élevée de l'amplificateur Am2. S'il est en outre entendu que la mémoire de mot M couplée à la sortie du démultiplexeur Dx est constituée par la juxtaposition de n cellules capables des mêmes performances, l'appareil A peut donc travailler sans problème de perte d'information avec un cycle élémentaire (intervalle entre deux impulsions de synchronisation f) raccourci ou bien allongé par rapport à sa durée en temps réel, et donc peut indifféremment fonctionner en accéléré ou au ralenti.

Cette faculté est particulièrement précieuse lorsque l'appareil est exploité en mode correction III, pour lequel les inverseurs du basculeur B et donc du relais Z4 sont en position L, tandis que l'un au moins des boutons BC est enfoncé. Dès lors, les circuits en trait tireté entrent en jeu: d'une part, comme montré en haut et à droite sur la Figure 3, l'enfoncement d'un bouton BC/1 ... n excite l'une des entrées d'une porte "ET" associée. dont l'autre entrée est couplée à l'étage de même rang du registre à décalage RD, et dont la sortie transite par une porte "OU" commune à tous ces circuits. La sortie X de cette porte est donc excitée au moment affecté à l'ordre C1 ... Cn dont la correction est requise par l'enfoncement du bouton BC correspondant, mais reste au repos lors du traitement des autres ordres.

Ce signal X est transmis à l'une des entrées de la porte "ET" située en bas à gauche sur le dessin et dont l'autre entrée reçoit les signaux de synchronisation f. En conséquence, au début du moment affecté à l'ordre à corriger, un circuit dit "margeur" ]$\varepsilon$[, de type bistable par exemple, est activé puis ramené au repos par l'impulsion f marquant la fin de ce moment. A l'état activé, ce circuit peut être excité pendant l'intervalle séparant deux signaux $\varepsilon$0, $\varepsilon$1 engendrés peu après le début et peu avant la fin du moment considéré, par exemple par le compteur-diviseur 1/n (en alternative, ce circuit pourrait aussi bien comporter des temporisations internes asservies à f). Durant cet intervalle $\varepsilon$0, $\varepsilon$1 le circuit ]E[ excite à travers une diode de découplage la bobine droite du relais Z4, qui donc commute momentanément son inverseur en position E pour permettre l'écriture de l'ordre corrigé se substituant à celui précédemment enregistré. Le circuit margeur a évidemment pour rôle d'éviter toute altération des fronts de synchronisation enregistrés avant la correction de l'ordre concerné, altération qui perturberait gravement l'asservissement de l'oscillateur VCO notamment en cas de corrections répétées et/ou combinées d'un ou plusieurs ordres C1 . . . Cn.

De la sorte, lorsque l'appareil A est exploité en mode de correction (III), il fournit en sortie d'une part, les ordres non modifiés restitués par simple lecture de l'enregistrement, et d'autre part les ordres dûment corrigés, qui sont simultanément enregistrés, les uns comme les autres étant par ailleurs exécutés.

Cette correction sélective de tout ordre déjà enregistré s'effectuant ainsi "au vol" alors que se déroule l'exécution des autres ordres, il serait intéressant dans certains cas de faciliter la tâche de l'opérateur en lui offrant la possibilité de procéder à des essais préalables "en blanc", c'est à dire avec exécution entemps réel mais sans enregistrement des modifications. A cet effet, il suffirait d'interdire provisoirement la commutation de l'inverseur du relais Z4 en position d'écriture E, par exemple en déconnectant la bobine droite du relais au moyen d'un interrupteur interposé entre le circuit margeur et la diode associée, et ainsi couper le courant normalement injecté par cette voie pour forcer le relais vers la droite.

A cepropos, il est souligné que la parfaite substitution d'un ordre corrigé à l'ordre antérieurement enregistré implique que le temps de commutation du relais Z4 dans l'un et l'autre sens doit par principe être très bref (une petite fraction d'un moment élémentaire), et que les autres composants concernés par cette commutation, et notamment les amplificateurs d'écriture AE et de lecture AL, doivent de manière corollaire être capables de réponses très rapides.

Ce fait peut être mis à profit pour assurer le traitement par l'appareil A d'ordres non plus analogiques, mais numériques ou codés, comme il a été déjà indiqué. Un tel ordre doit se présenter sous la forme d'un échelon de tension ou d'une impulsion de niveau maximal de préférence, survenant à un instant déterminé par convention au cours d'un moment élémentaire m, divisé en autant d'intervalles égaux que le requiert le nombre des informations distinctes à prendre en compte (par exemple 27 pour les lettres de l'alphabet plus un espace).

Dans le cas illustré et plus réaliste du traitement des chiffres 0 à 9, chaque moment élémentaire est divisé en dix intervalles égaux par référence à des impulsions fournies à cet effet par un circuit multiplicateur ×10 sur la base de la fréquence de synchronisation f (ou plus simplement, par une prise sur l'étage adéquat du compteur-diviseur 1/N). Ces impulsions de fréquence 10 f sont appliquées à l'entrée d'une roue codeuse décimale RC couplée à l'entrée Cn du multiplexeur d'entrée Cx dans l'exemple représenté. Selon le chiffre 0—9 affiché sur la roue codeuse, seule l'impulsion de rang correspondant est transmise au multiplexeur et prise en compte par l'appareil. Il s'ensuit que le comparateur ΔV bascule — au moment de l'écriture de l'ordre Cn — avec un retard relatif proportionnel au chiffre affiché, puis reste verrouillé en l'état jusqu'à la fin du moment en cause. Lors de la lecture de ce même moment sur l'enregistrement, le front positif du signal de sortie de l'amplificateur AL se présente avec un retard relatif identique à la sortie de la porte "OU" des circuits communs, comme lors de l'écriture. Le générateur GR se trouve donc bloqué à un niveau proportionnel, mais n'intervient pas en l'occurrence, sauf application spéciale requérant deux informations correspondantes, l'une codée et l'autre analogique.

Le front positif prélevé à la sortie de la porte "OU" citée est appliqué à l'une des entrées d'une porte "et" formant partie intégrante d'un circuit de sortie décimale SD qui reçoit par un conducteur Y les impulsions à fréquence 10 f fournies à la roue codeuse RC. L'autre entrée de la porte "et" est pour sa part reliée à une sortie dite "numérique" Nn de l'étage n du démultiplexeur Dx, portée à l'état vrai (positif en l'occurrence) lorsque cet étage est sélectionné. Ceci étant, la porte "et" n'est rendue passante qu'à l'arrivée du front positif précité, et donc avec un retard relatif correspondant au chiffre affiché sur la roue codeuse RC — en temps réel à l'écriture, comme à la lecture ultérieure de l'enregistrement. La coïncidence temporelle du signal de sortie de cette porte "et" avec l'une des impulsions transmises par le conducteur Y permet d'identifier le chiffre à afficher à l'aide d'un classique circuit de décodage par portes, éventuellement doté d'une mémoire de même cycle que la mémoire de mot M couplée aux sorties F1 . . . Fn du démultiplexeur Dx.

Dans le cas mentionné au début de la description, concernant l'emploi de l'appareil A pour la conduite d'une machine-outil à commande programmée, les informations numériques ou codées ainsi enregistrées et restituées pourraient être utilisées par exemple pour la commande sélective par une même voie de plusieurs organes similaires, par example des électrovannes pour la distribution de différents produits de lubrification ou detraitement de surface. Ou encore et comme suggéré sur la Figure 1, ces informations numériques pourraient assurer l'appel sélectif de différents sous-programmes complexes dans la mémoire d'un microprocesseur μP, spécifier l'amplitude d'un mouvement par ailleurs commandé du bras de préhension mécanique, ou enfin fournir les cotes d'usinage d'une pièce.

Il est bien évident que ces exemples d'application ne sont nullement limitatifs et que l'appareil pourrait être utilisé à bien d'autres fins, par exemple pour règler des jeux de lumière et actionner des accessoires de scène dans un spectacle incluant un accompagnement musical enregistré sur d'autres pistes de la même bande magnétique.

Il est par ailleurs bien entendu que le schéma de la Figure 3 n'a qu'une valeur explicative et ne préjuge nullement de la technologie de réalisation de l'appareil. En particulier, les relais et autres contacteurs pourraient être avantageusement remplacés par des montages électroniques plus rapides et plus fiables, incorporant par exemple des composants de type MOS parfaitement compatibles avec les portes, registres, compteurs et amplificateurs opérationnels de même technologie disponibles sur le marché. Par ailleurs, de nombreuses variantes des circuits peuvent être envisagées pour assurer les fonctions spécifiées.

**Revendications**

1. Appareil multiplex formant interface transparente et atemporelle pour l'enregistrement magnétique sur une seule piste, la restitution à l'identique et la modification sélective d'un ensemble de tensions de commande, comportant trois circuits d'interface dont l'un est couplé à un dispositif d'enregistrement magnétique sélectivement utilisable en écriture ou en lecture et dont les autres sont respectivement un multiplexeur (Cx) d'entrée et un démultiplexeur (Dx) de sortie couplées à deux ensembles homologues de sources et récepteurs de tensions de commande et incluent deux registres identiques dont l'exploration séquentielle cyclique est commandée pas à pas à partir d'impulsions de synchronisation (F), caractérisé en ce qu'il comprend essentiellement et en combinaison opérante:

— des circuits communs utilisés tant en écriture qu'en lecture, qui incluent

· un oscillateur (VCO) engendrant des impulsions d'horloge (F) dont la fréquence de récurrence est asservie à la vitesse de défilement (VV) du support d'enregistrement en lecture,

· un compteur-diviseur associé (1/N) engendrant une impulsion de synchronisation (f) chaque fois qu'il a reçu un nombre déterminé d'impulsions d'horloge,

· un générateur (GR) intégrant ces dernières et remis à zéro lors de chaque impulsion de synchronisation pour produire une tension en rampes récurrentes dont chacune est par ailleurs limitée à un niveau égal à celui d'une tension de commande (V) concernée,

· une mémoire analogique élémentaire (m) qui d'une part est périodiquement couplée à la sortie dudit générateur pour échantillonner le niveau de limitation de chaque rampe, et d'autre part est reliée en permanence à l'entrée du démultiplexeur (Dx), dont chaque sortie est couplée à une semblable mémoire,

— et des circuits utilisés sélectivement en écriture et en lecture, à savoir

· un comparateur de tensions (ΔV) couplé aux sorties du multiplexeur (Cx) et du générateur (GR) pour engendrer, dès que le niveau de chaque rampe devient égal à la tension de commande à transcrire, un signal de basculement qui commande d'une part la limitation de ladite rampe et d'autre part l'inversion de la polarité d'un signal d'écriture inversée lors de chaque impulsion de synchronisation, de sorte que ce signal est formé de doubles créneaux à front intermédiaire mobile en fonction du niveau de la tension de commande transcrite,

· et un amplificateur de lecture (AL) séparant les impulsions négatives et positives dérivées du signal enregistré, qui sont utilisées les unes pour l'asservissement en fréquence de l'oscillateur (VCO) et les autres pour commander la limitation de chaque rampe engendrée par le générateur (GR).

2. Appareil selon la revendication 1, dans lequel la fréquence de récurrence des impulsions d'horloge (F) engendrées par l'oscillateur (VCO) est fonction d'une tension continue de contrôle (VCC) règlée à une valeur fixe en écriture mais fournie en lecture par un comparateur de phase (Δφ) recevant les impulsions de synchronisation (f) et les impulsions homologues dérivées de l'enregistrement.

3. Appareil selon la revendication 1 ou la revendication 2, dans lequel le générateur de rampes récurrentes (GR) est un montage agencé pour intégrer les impulsions d'horloge (F) jusqu'au niveau de la tension de commande (V) choisie puis maintenir ce niveau jusqu'à la prochaine impulsion de synchronisation f assurant sa remise à zéro.

4. Appareil selon l'une quelconque des revendications 1 à 3, dans lequel la mémoire élémentaire (m) comprend un condensateur Qm monté en dérivation entre un point de référence de potentiel et la liaison entre deux amplificateurs (Am1), (Am2) agissant comme adaptateurs d'impédance et suiveurs de tension, ledit condensateur ne recevant la tension de sortie de l'amplificateur d'entrée qu'au cours de la période de limitation de chaque rampe issue du générateur (GR).

5. Appareil selon l'une quelconque des revendications 1 à 4, dans lequel l'exploration séquentielle cyclique des positions homologues des registres multiplexeur (Cx) et démultiplexeur (Dx) est commandée en synchronisme par un registre à décalage (RD) bouclé en anneau, qui comporte au moins une position supplémentaire et dont la progression pas à pas est commandée par les impulsions de synchronisation (f).

6. Appareil selon l'une quelconque des revendications 1 à 5, dans lequel le circuit d'écriture comprend un montage (Z3 + K) d'inversion du courant de polarisation de la tête d'enregistrement TU, par lequel elle est reliée d'une part au point milieu d'un pont diviseur de tension symétrique (Re/Re) alimenté par une source continue, et d'autre part à l'un ou à l'autre pôle de ladite source, selon la polarité du signal de sortie du comparateur (ΔV).

7. Appareil selon l'une quelconque des revendications 1 à 6, pourvu de circuits de correction incluant d'une part, une quatrième interface de commande manuelle formée de commutateurs (BC/1 ... n) et de circuits de portes associés aux registres de multiplexage (Cx, Dx) pour en sélectionner une ou plusieurs positions homologues, et d'autre part, un montage inverseur automatique (Z4) par lequel la tête (TU) du dispositif d'enregistrement est temporairement découplée du circuit de lecture et couplée à celui d'écriture lors du traitement de chaque position sélectonnée des registres.

8. Appareil selon la revendication 7, dont le montage inverseur automatique (Z4) est commandé par l'intermédiaire d'un circuit margeur (]E[) agissant pour respectivement retarder et avancer sa commutation par rapport aux impulsions de synchronisation f qui déterminent le début et la fin du traitement de chaque position sélectionnée des registres.

9. Appareil selon l'une quelconque des revendications 1 à 8, comportant des circuits pour le traitement d'informations numériques ou codées associés à au moins l'une de ses voies et incluant

· des moyens (×10) pour diviser la période de traitement comprise entre deux impulsions de synchronisation (f) en plusieurs intervalles discrets, à chacun desquels est affectée une valeur ou signification conventionnelle,

· une source de codage (RC) couplée auxdits moyens et agencée pour fournir à la position concernée du multiplexeur (Cx) un échelon ou une impulsion de tension au cours de l'intervalle correspondant à l'information à traiter,

· et un récepteur de décodage (SD) couplé auxdits moyens d'une part, et d'autre part à travers une porte "et" à une sortie spéciale (Nn) de la position concernée du démultiplexeur (Dx) excitée pendant toute sa période de sélection, et à une porte "OU" par laquelle est commandée en écriture comme en lecture la limitation du niveau des rampes engendrées par le générateur (GR).

10. Appareil selon l'une quelconque des revendications précédentes, dont les composants actifs sont de nature électronique et notamment réalisés au moyen d'éléments de technologie dite "MOS".

**Patentansprüche**

1. Asynchrone Interface bildende Multiplexeinrichtung zur magnetischen Aufzeichnung auf einer einzigen Spur, zur identischen Wiedergewinnung und zur selektiven Modifikation einer Menge von Steuerspannungen mit drei Interfacekreisen, von denen einer an ein selektiv zum Schreiben oder Lesen verwendbares magnetisches Aufzeichnungsgerät angekoppelt ist und von denen die anderen jeweils ein Eingangsmultiplexer (Cx) und ein Ausgangsdemultiplexer (Dx) sind, die an zwei übereinstimmende Ausgabe- und Eingabeinheiten für Steuerspannungen angekoppelt sind und zwei identische Register aufweisen, deren sequenzmäßige, zyklische Abtastung stufenweise in Abhängigkeit von Synchronisationsimpulsen (f) gesteuert wird, dadurch gekennzeichnet, daß sie im wesentlichen und in zusammenwirkender Kombination aufweist,

— gemeinsame Schaltkreise die sowohl zum Schreiben als auch zum Lesen benutzt werden und die aufweisen,

· einen Oszillator (VCO) der Taktimpulse (F) erzeugt, deren Folgefrequenz von der Ablaufgeschwindigkeit (VV) des Aufzeichnungsträgers beim Lesen abhängig ist,

· einen mit einem Divisor verbundenen Zähler (1/N) der jedesmal, wenn er eine vorgegebene Anzahl von Taktimpulsen erhalten hat, einen Synchronisationsimpuls (f) erzeugt.

· einen diese letzteren integrierenden Generator (GR), der bei jedem Synchronisationsimpuls auf Null zurückgestellt wird und eine in aufeinanderfolgenden Rampen verlaufende Spannung erzeugt, wobei andererseits jede Rampe durch eine Niveau begrenzt ist, das dem Niveau einer zugrodneten Steuerspannung (V) gleich ist,

einen Analog-Elementarspeicher (m) der einerseits periodisch an den Ausgang des besagten Generators angekoppelt ist um das Niveau der Begrenzung jeder Rampe abzutasten und der andererseits ständig mit dem Eingang des Demultiplexers (Dx) verbunden ist, von dem jeder Ausgang an einem ähnlichen Speicher angekoppelt ist,

— und selektiv zum Schreiben und Lesen benutzte Schaltkreise und zwar,

· einen an die Ausgänge des Multiplexers (Cx) und des Generators (GR) angekoppelten Spannungsvergleicher (ΔV) welcher, sobald das Niveau jeder Rampe gleich der Steuerspannung zum Umschreiben ist, ein Kippsignal erzeugt, das einerseits die Begrenzung der besagten Rampe steuert und andererseits bei jedem Synchronisationsimpuls die Umkehrung der Polarität eines inversen Schreibsignales bewirkt, derart, daß dieses Signal aus einem Doppelrechteck mit einer als Funktion des Niveaus der Steuerspannung zum Umschreiben bewegbaren Zwischenflanke ausgebildet ist,

·und einen Leseverstärker (AL), welcher die negativen und positiven Impulse trennt, die aus dem aufgezeichneten Signal abgeleitet werden und von denen die einen zur Steuerung der Frequenz des Oszillators (VCO) und die anderen zur Steuerung der Begrenzung jeder vom Generator erzeugten Rampe verwendet werden.

2. Einrichtung nach Anspruch 1, bei der die Folgefrequenz der vom Oszillator (VCO) erzeugten Taktimpulse (F) eine Funktion einer Steuer—Gleichspannung (VCC) ist, welche beim Schreiben auf einen festen Wert geregelt ist, aber beim Lesen von einer Phasenvergleichsstufe (Δφ) geliefert wird, der die Sychronisationsimpulse (f) und die übereinstimmenden, aus der Aufzeichnung abgeleiteten Impulse zugeführt werden.

3. Einrichtung nach Anspruch 1 oder 2, bei
der der Generator der aufeinanderfolgenden
Rampen (GR) ein Schaltkreis ist, der so ausgebildet ist, daß er die Taktimpulse (F) bis zum
Niveau der gewählten Steuerspannung (V) integriert und dann dieses Niveau aufrechterhält bis
zum nächsten Synchronisationsimpuls (f), der
seine Rückstellung auf Null bewirkt.

4. Einrichtung nach einem der Ansprüche 1
bis 3, bei der der Elementarspeicher (m) einen
Kondensator (Qm) aufweist, der im Nebenschluß zwischen einem Potential-Bezugspunkt
und die Verbindung zwischen zwei Verstärkern
(Am1, Am2), die als Impedanzanpassung- und
Spannungsfolgeschaltung arbeiten, geschaltet
ist, wobei der besagte Kondensator die Spannung vom Ausgang des Eingangsverstärkers nur
im Verlauf der Begrenzungsperiode jeder vom
Generator (GR) abgegebenen Rampe erhält.

5. Einrichtung nach einem der Ansprüche 1
bis 4, bei der die sequenzmäßige und zyklische
Abtastung der übereinstimmenden Positionen
der Register des Multiplexers (Cx) und des
Demultiplexers (Dx) synchron durch ein in einer
Ringschleife angeordnetes Schieberegister gesteuert wird, welches wenigstens eine zusätzliche Position aufweist, und dessen stufen-
weiser Ablauf durch die Synchronisations-
impulse (f) gesteuert wird.

6. Einrichtung nach einem der Ansprüche 1
bis 5, bei der der Schreibkreis eine Schaltungsanordnung (Z3 + K) zur Umkehrung des
Polarisationsstromes des Aufzeichnungskopfes
(T4) aufweist, durch welche er einerseits
mit dem Mittelpunkt einer symmetrischen
Spannungsteilerbrücke (Rc/Rc), die von einer
Gleichspannungsquelle gespeist wird, und
andererseits mit dem einen oder dem anderen
Pol dieser Spannungsquelle je nach der Polarität des Signals am Ausgang des Spannungs-
vergleichers (ΔV) verbunden ist.

7. Einrichtung nach einem der Ansprüche 1
bis 6, ausgerüstet mit Korrekturkreisen, die
einerseits ein viertes Interface zur manuellen
Steuerung aufweisen, das aus Kommutatoren
(BC/1 . . . n) und Torschaltungen gebildet ist, die
mit den Multiplexer-Registern (Cx, Dx) verbunden sind, um in ihnen eine oder mehrere
übereinstimmende Positionen auszuwählen,
und andererseits einen automatischen Umschalter (Z4), durch welchen der Kopf (TU) der
Aufzeichnungsvorrichtung zeitweilig vom Lesekreis abgekoppelt und an den Schreibkreis
angekoppelt wird, beim Bearbeiten jeder ausgewählten Position der Register.

8. Einrichtung nach Anspruch 7, bei der der
automatische Umschalter (Z4) unter Zwischenschaltung eines Randstellkreises (]E[), der ein
Verzögern oder Beschleunigen seiner Umschaltungen in Abhängigkeit von den Synchronisationsimpulsen (f) bewirkt, die den
Anfang und das Ende der Bearbeitung jeder ausgewählten Position der Register festlegen.

9. Einrichtung nach einem der Ansprüche 1
bis 8, mit Schaltkreisen für die Bearbeitung von
numerischen oder kodierten Informationen, die
mit wenigstens einem ihrer Kanäle verbunden
sind und aufweisen,
· Mittel (×10) zum Teilen der Bearbeitungs-
periode zwischen zwei Synchronisationsimpulsen (f) in mehrere diskrete Intervalle von
denen jedem ein konventioneller Wert oder eine
Bedeutung zugeordnet sind,
· eine an besagtem Mittel angekoppelte
Kodierungs-Ausgabeeinheit (RC), die so ausgebildet ist, daß sie bei der betreffenden Position
des Multiplexers (Cx) eine Spannungsstufe oder
einen Spannungsimpuls im Zuge des der zu
bearbeitenden Information entsprechenden Intervalls liefert,
· eine Dekodierungs-Eingabeeinheit (SD) die
einerseits an besagtem Mittel angekoppelt ist
und andererseits über ein UND-atter an einen
Spezialausgang (Nn) der betreffenden Position
des Demultiplexers (Dx) angeschlossen ist, der
während der gesamten Auswahlperiode erregt
ist und an ein ODER-Gatter, durch welches
beim Schreiben und Lesen die Begrenzung des
Niveaus der vom Generator (GR) erzeugten
Rampen gesteuert wird.

10. Einrichtung nach einem der vorhergehenden Ansprüche, bei der die aktiven
Komponenten elektronischer Natur sind und
insbesondere mit in MOS-Technik ausgeführten Elementen realisiert sind.

**Claims**

1. Multiplex device forming an atemporal
interface for magnetic recording on a single
track, identical restoration and selective
modification of a collection of control signal
voltages, comprising three interface circuits one
of which is coupled to a magnetic recording
device which is selectively usable in either a
"write" or a "read" mode, with the other circuits being respectively an input multiplexer
(Cx) and an output demultiplexer (Dx) which are
coupled to two homologous sets of sources and
receivers of signal voltages and including two
identical registers the sequential cycle examination of which is controlled step by step, starting
with syncrhonization pulses (F), characterized in
that is comprises essentially and in operational
combination:
— common links utilized both in the "write"
mode and in the "read" mode, which include
— an oscillator VCO which generates clock
pulses F the recurrence frequency of which is
governed by the transport speed VV of the recording support in the "read" mode,
— an associated counter-divider (1/N) which
generates a synchronization pulse (f) each time
it receives a predetermined number of clock
pulses,
— a generator (GR) which integrates the
latter and returns to zero at the time of each synchronization pulse to produce a recurring ramp voltage wherein each ramp is limited to a level equal to that of a specified control signal voltage V,

— an elementary analog data storage unit (m) which on the one hand is periodically coupled to the output of said generator, to sample the limitation level of each ramp, and on the other hand is permanently connected to the input of the demultiplexer (Dx), with each output of said register being coupled to a similar data storage unit, and

— circuits which are selectively utilized in the "write" and the "read" mode, namely:

— a voltage comparator (ΔV) coupled to the outputs of the multiplexer (Cx) and to the generator (GR), to generate a switching signal, after the level of each ramp becomes equal to the control signal voltage which is to be transcribed, which governs the limitation of said ramp and also the inversion of the polarity of an inverted write signal at the time of each synchronization pulse, whereby said signal is formed from pairs of step impulses having an intermediate front which is mobile as a function of the level of the transcribed control voltage, and

— a "read" amplifier (AL) which separates the negative and positive pulses derived from the recorded signal, which are used the ones to control the frequency of the oscillator (VCO) and the others to control the limitation of each ramp ganerated by generator (GR).

2. Device according to claim 1, wherein the recurrence frequency of the clock pulses (F) generated by oscillator (VCO) is a function of a continuous control voltage (VCC) regulated at a fixed value in — the "write" mode, while in the "read" mode said voltage is supplied by a phase comparator (Δφ) receiving the synchronization pulses (f) and the homologous pulses derived from the recording.

3. Device according to one of claims 1 or 2, wherein the generator of recurring ramps (GR) is an arrangement arranged to integrate the clock pulses (F) up to the level of the chosen control signal voltage (V) and to maintain this level until the next synchronization pulse (f) assuring its return to zero.

4. Device according to any one of claims 1 to 3, wherein the elementary storage (m) comprises a capacitor (Qm) mounted in shunt between a reference potential point and the connection between two amplifiers (Am1), (Am2) which act as impedance adapters and voltage followers, whereby said capacitor only receives the output voltage of the input amplifier during the period of limitation of each ramp issued from generator (GR).

5. Device according to any one of claims 1 to 4, wherein the sequential cyclic exploration of the homologous positions of the multiplexer register (Cx) and the demultiplexer (Dx) is synchronously controlled by a shift register (RD) hooked up in a ring, which has at least one supplementary position, and of which the step-by-step progression is controlled with the synchronization pulses (f).

6. Device according to any one of claims 1 to 5, wherein the "write" circuit includes an arrangement (Z3 + K) for inverting the polarizing current of the recording head (TU), whereby it is connected to the center point of a symmetrical voltage divider (Re/Re) which is supplied by a direct current source, and also to one pole or the other of said source, depending on the polarity of the output signal from comparator (ΔV).

7. Device according to any one of claims 1 to 6, wherein it comprises correction circuits including, on the one hand, a fourth manual control interface, formed from switches (BC/1 to n) and from gate circuits associated with the multiplex registers (Cx, Dx), for selecting one or more homologous positions, and on the other hand, an automatic switching arrangement (Z4) by which the head (TU) of the recording device is temporarily decoupled from the "read" circuit and coupled to the "write" link during the processing of each selected position of the registers.

8. Device according to claim 7, in which the automatic inverting arrangement (Z4) is controlled by the intermediary of a margin circuit (JEC) which acts to respectively retard and advance its switching with respect to the synchronization pulses (f) which determine the start and the end, respectively, of the processing for each selected position of the registers.

9. Device according to any one of claims 1 to 8, wherein it contains circuits for processing numerical or coded information associated with at least one of its paths, and including:

— means (×10) to divide the processing period included between two synchronization pulses (f) into multiple discrete intervals each of which is assigned a conventional value or signification,

— a coding source (RC) coupled to said means (×10) and arranged to supply a voltage step or voltage pulse to the specified position of the multiplexer (Cx) during the interval corresponding to the information to be processed, and

— a decoding receiver (SD) which is coupled to said means (×10) on the one hand, and, on the other hand, through an "and" gate to a special output (Nn) from the specified position of the demultiplexer (Dx), which is excited during the entire period of selection, and to an "or" gate by which the limitation of the level of the ramps generated by the generator (GR) is controlled both in the "write" mode and in the "read" mode.

10. Device according to any one of the preceding claims, of which the active components are electronic and notably realized by means of technological elements known as "MOS".

0 020 195

# FIGURE 1

# FIGURE 2

0 020 195

FIGURE 3